# EUROPEAN PATENT SPECIFICATION

(11) **EP 2 143 057 B1**
(45) Date of publication and mention of the grant of the patent: **06.09.2017**
(21) Application number: 08747443.3
(22) Date of filing: 02.05.2008
(51) Int. Cl.: H04W 28/16, G06Q 30/08

(54) **SPECTRUM AUCTION AND SHARING ON WIRELESS CLIENTS**
SPEKTRUMSAUKTION UND VERTEILUNG AUF DRAHTLOSE KLIENTEN
ENCHÈRE DE SPECTRE ET PARTAGE SUR CLIENTS SANS FIL

(30) Priority: 08.05.2007 US 928113 P; 05.09.2007 US 899350
(43) Date of publication of application: 13.01.2010
(73) Proprietor: Microsoft Technology Licensing, LLC, Redmond, WA 98052 (US)
(72) Inventor: WU, Deyun, Redmond, WA 98052-6399 (US); HASSAN, Amer, A., Redmond, WA 98052-6399 (US); KUEHNEL, Thomas, W., Redmond, WA 98052-6399 (US)
(74) Representative: Goddar, Heinz J.
(86) International application number: PCT/US2008/062343
(87) International publication number: WO 2008/140968

(56) References cited:
- WO-A1-2004/057505
- WO-A2-00/77670
- US-A1- 2003 050 070
- US-A1- 2006 143 111
- US-B1- 7 043 225
- SORABH GANDHI ET AL: "A General Framework for Wireless Spectrum Auctions", 2007 2ND IEEE INTERNATIONAL SYMPOSIUM ON NEW FRONTIERS IN DYNAMIC SPECTRUM ACCESS NETWORKS : [DYSPAN 2007] ; DUBLIN, IRELAND, 17 - 20 APRIL 2007, IEEE, US, 1 April 2007 (2007-04-01), pages 22-33, XP031095599, ISBN: 978-1-4244-0663-0
- QUE Y P ET AL: "Online bandwidth auctions for efficient allocation of bandwidth", NETWORKS, 2004. (ICON 2004). PROCEEDINGS. 12TH IEEE INTERNATIONAL CONF ERENCE ON SINGAPORE 16-19 NOV. 2004, PISCATAWAY, NJ, USA,IEEE, US, vol. 2, 16 November 2004 (2004-11-16), pages 630-634, XP010777424, DOI: 10.1109/ICON.2004.1409248 ISBN: 978-0-7803-8783-6
- KLOECK C ET AL: "Multi-Level Spectrum Auction Through Radio Access", ELECTROTECHNICAL CONFERENCE, 2006. MELECON 2006. IEEE MEDITERRANEAN BENALMADENA, SPAIN 16-19 MAY 2006, PISCATAWAY, NJ, USA,IEEE, 16 May 2006 (2006-05-16), pages 591-594, XP010927823, DOI: 10.1109/MELCON.2006.1653170 ISBN: 978-1-4244-0087-4
- HUANG J. ET AL.: 'Auction-Based Spectrum Sharing' MOBILE NETWORKS AND APPLICATIONS vol. 11, no. 3, June 2006, pages 405 - 408, XP019403991

## Description

### BACKGROUND

Many mobile computing devices support wireless communications so that users may connect those devices to networks without constraints on mobility imposed by wired connections. However, wireless communications require access to spectrum and sometimes this access is not readily available. There is a growing commercial need to make more efficient use of wireless spectrum controlled by exclusive owners and/or licensees to allow users to access spectrum for wireless communication.

US 7,043,225 B1 discloses a method and system for brokering bandwidth in a wireless communication network including receiving a request for a wireless service at a geographic region, determining an availability of the wireless services at the geographic region and generating a response to the request based on the availability of the wireless service.

The Article "A General Framework for Wireless Spectrum Auctions" by S. Gandhi et al., 2007 2nd IEEE International Symposium on new frontiers in dynamic spectrum access networks, Dublin, Ireland, 17-20 April 2007, IEEE, pages 22-33 discloses a real time spectrum auction framework to distribute spectrum among a large number of wireless users under interference constraints.

### SUMMARY

The present invention relates to methods for using Software Defined Radio technology to enable spectrum auctioning, allowing a user to gain access to otherwise unavailable spectrum. Owners and/or licensees of the spectrum may have the exclusive rights to the spectrum, but these owners and/or licensees can allow other users to access the spectrum in certain situations, for example, limited time use without restrictions, or use based on interference constraints. To increase the effectiveness of wireless communication, and therefore the utility of mobile devices that communicate wirelessly, groups of users (e.g., a network or multiple networks) may use Software Defined Radio (SDR) on their mobile devices to bid for spectrum usage when a wireless network is otherwise unavailable to them.

In one embodiment, a method for accessing a radio spectrum according to claim 1 is provided, the method being performed in a wireless device of a user. In another embodiment, a method for providing access to a radio spectrum according to claim 6 is disclosed, the method being performed at an auctioneer's device. In another embodiment, a computer-readable medium according to claim 9 is provided. In still another embodiment, an apparatus for operating a wireless computing device according to claim 10 is provided.

The foregoing is a non-limiting summary of the invention, which is defined by the attached claims.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1a is a flowchart of one illustrative process according to an embodiment of the invention;
FIG. 1b is a flowchart of another illustrative process according to an embodiment of the invention;
FIG. 2 is a flowchart of another illustrative process according to an embodiment of the invention;
FIG. 3 is a diagram of an illustrative computer system environment in which embodiments of the invention may be implemented; and
FIG. 4 is an exemplary computing device that may be used in accordance with embodiments of the invention.

### DETAILED DESCRIPTION

Aspects of this invention relate to processes and apparatuses for spectrum auctioning, allowing a user or a group of users (e.g., a network or multiple networks) to bid for spectrum usage, as desired. According to aspects of the invention, the method can be implemented, at least in part, by Software Defined Radio (SDR). Various reasons exist for a user or a group of users to require obtaining spectrum, as will be discussed below. Suffice it to say for now that aspects of the present invention are directed to processes allowing a user to obtain access to a wireless spectrum through spectrum auctioning techniques.

Although the procedure described herein can be implemented in software, such as with software defined radio, the present invention is not limited in this regard as other arrangements for auctioning spectrum may be employed. Also, the auctioning process may be transparent to the user, except upon exchange of consideration for usage.

There is a growing commercial need in making more efficient use of wireless spectrum by shifting from the exclusive (centralized) spectrum ownership models to the more flexible spectrum usage. In this regard, the owners and/or licensees of the spectrum may have the exclusive rights to the spectrum, but the inventors have found that these providers can allow other users to access the spectrum in one of two situations: 1) limited time use without restrictions, and/or 2) use based on interference constraints.

Technology is evolving to allow for a more flexible use of the spectrum. SDR allows for variation in spectrum, power, bandwidth, modulation, etc. SDR with auctioning can be used to reuse the operating system (OS) modules to transmit and receive in different bands. The 3650MHz band used in the US is an example where SDR can be used whereby SDR can be used to transmit 10 MHz 802.1 la/g in those bands at higher power.

The inventors have found that oftentimes the most efficient and cost effective spectrum available may require that certain constraints be placed on using the spectrum. As an example, the leased spectrum may be limited to requiring a certain amount of interference and/or may be limited to a certain time period. The auctioned spectrum may require other constraints on usage, or no constraints on usage, as the present invention is not limited in this respect. Accordingly, in one embodiment, spectrum may be negotiated based on an incentive to allow the provider to give up spectrum in return for money, other spectrum or some other form of consideration. In another embodiment, spectrum access may be negotiated based on interference. In one embodiment, usage is based on maximum interference allowed to the provider of the spectrum.

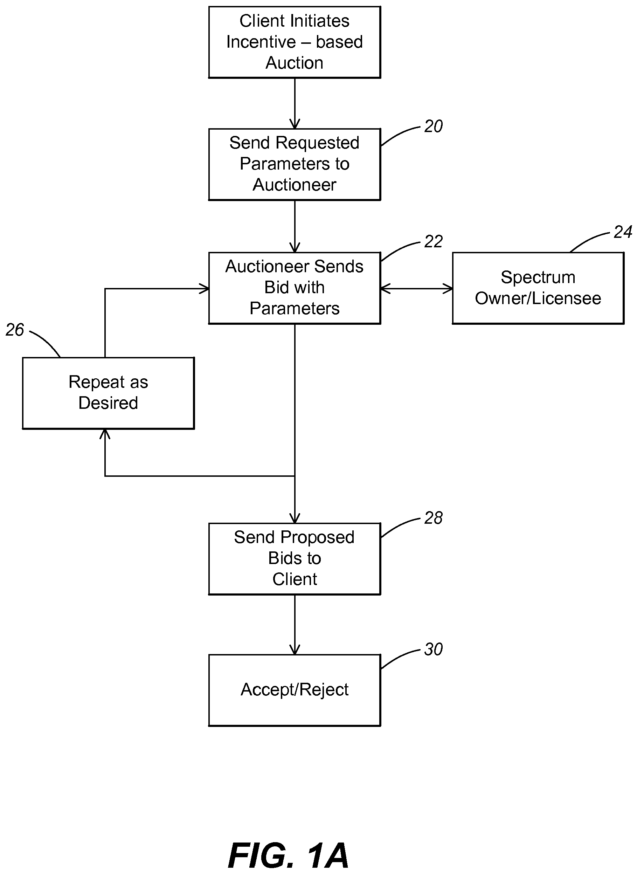

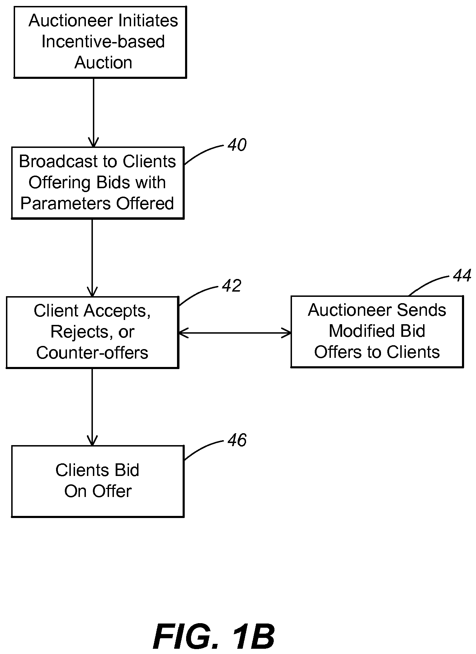

Incentive-based time-limited auctioning will now be described with reference to the flowcharts of FIGs. 1a and 1b. In these embodiments, the auctioning may be initiated by the client user or the auctioneer, as the present invention is not limited in this respect. With client initiated auctioning, shown in the flowchart of FIG. 1a, the request **20** may include certain parameters, such as one or more of the bandwidth required, the set of bands preferred, the mask properties desired, that the request is based on an incentive model and/or the times and durations of usage. Other parameters may be specified, as the present invention is not limited in this respect. In one embodiment, the request is sent via the client user's wireless device over a low data rate request over a common unlicensed band (e.g., usually in the 2.4GHz, although other frequencies may be employed, as the present invention is not limited in this respect). Of course, the present invention is not limited in this respect, as the request may be made using a different device and/or may be sent over a non-wireless network for subsequent usage by the wireless device.

At this point, in one embodiment, having received the request, at **22,** the auctioneer sends, as illustrated at **24,** first round of bids with the parameters, including, for example: bandwidth offered, bands offered, mask properties available, and that the request is based on an incentive model and/or subject to times and/or durations of usage constraints. All spectrum providers receive this same information. In one embodiment, the auctioneer may send second, and if desired, subsequent n number of rounds of bids, as illustrated at **26.** It should be appreciated that the auctioneer may be the owner or licensee or may be an independent auctioneer, as the present invention is not limited in this respect.

The proposed bids may then be sent back to the client user, as illustrated at **28,** and the client may then make a choice of which bid to take, as illustrated at **30.** In one embodiment, the client then would send data indicating an end of the auction. The client then enters the usage agreement with the chosen auctioneer.

With auctioneer initiated auctioning, as illustrated in the flowchart of FIG. 1b, the auctioneer, at **40,** broadcasts an offering of bids with, in one embodiment, the following parameters: bandwidth available, bands available, mask properties offered, that the bid is based on an incentive model agreement and/or subject to times and/or durations of usage constraints.

In one embodiment, as illustrated at **42,** the client may accept the bid or the client can counter offer, as illustrated at **44.** For example, the client can accept the bandwidth offered or suggest accepting a lower bandwidth. Also the client can select the set of bands needed. The client can then also accept mask properties offered or suggest a less stringent option. The client may also accept the incentive model and the times and durations of usage constraints. Other clients receive all information and outbid last client bid with similar information, as illustrated at **46.** The present invention is not limited to a single auctioneer initiating the auction and there may be more than one auctioning spectrum to the client user(s).

In one embodiment, joint auctioning may be provided. In this embodiment, when more spectrum is needed than can be offered by one entity, multiple auctioneers may enter the bidding process such that the auctioneers and/or client can package multiple offers to obtain the desired spectrum.

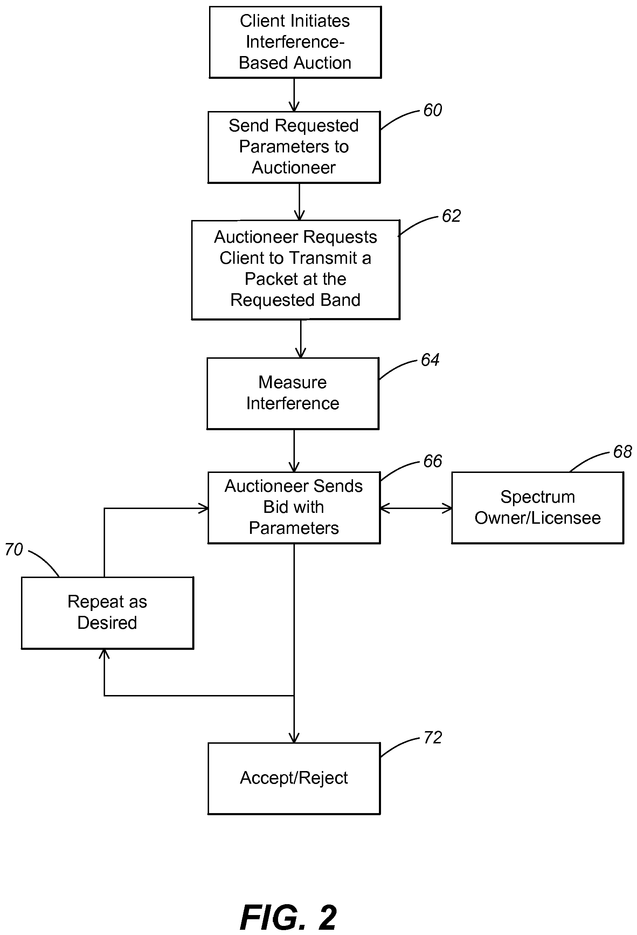

Interference-based auctioning will now be described. In these embodiments, the auctioning may be initiated by the client user or the auctioneer, as the present invention is not limited in this respect. With client initiated auctioning, as illustrated in the flowchart of FIG. 2, the request **60** may include certain parameters, such as one or more of the bandwidth required, the set of bands preferred, the mask properties desired, the physical location (if available), that the request is based on interference-based auctioning, and that a certain amount of interference is acceptable. Other parameters may be specified, as the present invention is not limited in this respect. In one embodiment, the request is sent via the client user's wireless device over a low data rate request over a common unlicensed band (e.g., usually in the 2.4GHz, although other frequencies may be employed, as the present invention is not limited in this respect). Of course, the present invention is not limited in this respect, as the request may be made using a different device and/or may be sent over a non-wireless network for subsequent usage by the wireless device.

In one embodiment, after the request is made, the auctioneers request the client user to transmit a short packet at the requested band, as illustrated at **62.** The auctioneer then measures the incremental interference at the auctioneer's receiver output, as illustrated at **64.** At **66,** the auctioneer may then send a first round of bids with one or more of the following pieces of information: bandwidth offered, bands offered and/or power allowed. At **68,** all owners and/or licensees receive this same information. In one embodiment, the auctioneer may send second, and if desired, subsequent n number of rounds of bids, as illustrated at **70.** An auction continues with power/bandwidth tradeoff with other auctioneers and the client user can then make a decision on offered parameters from all auctioneers, as illustrated at **72.**

One method of controlled interference is to keep the interference level under some threshold. This can be done (on average) if the locations of the primary user receivers known as in the case of fixed wireless services.

In one embodiment, the auctioneers are trusted auctioneers, meaning that the auctioneer is authorized to control the band and/or the transaction and/or that communication between the client user and the auctioneer proceeds through suitable authorization techniques.

It should be appreciated that the constraints imposed on access to the spectrum may include a length of time use on the spectrum is permitted, an amount of interference acceptable, or both, as the present invention is not limited in this respect.

Illustrative examples of situations when spectrum auctioning may be employed will now be described.

In one illustrative example, a user may be in need of a network outside of his or her home network, such as may be the case when a user is traveling out of the country. In this regard, the user has his/her laptop with SDR and wants to access the local wireless network, whether it is WiFi or some other network protocol. Because the network is not one the user normally would need access to, the user typically would not be able to access the network, but nevertheless must somehow gain access. In one embodiment, software on the laptop allows the user access a Microsoft or third party's program, which would cause a communication link to access a local network. An auctioneer at the receiving end of the communication determines the best available option(s) (based, e.g., on the interference and/or the associated costs) for the user given the type of communication the user desires and/or needs (based, e.g., on the hardware and software installed on the user's computer).

In another illustrative embodiment, a user group may desire to set up a temporary network, e.g., to provide a network for a temporary office for multiple users. In one example, the user group desires to use its exclusive wireless network, which may not be based on WiFi, and desires to see if there is any network in the area that from which the group can utilize a spectrum. In this example, spectrum may only be available if the user group agrees to be within a certain interference limit and/or time constraints.

In another illustrative example, a wireless client A purchases temporary spectrum usage from wireless client B. In this example, wireless client A with a basic card can process multiple radios one by one or simultaneously if the corresponding software packages are installed. This makes the temporary usage of a radio band possible. For example, if a business customer (wireless client A) travels to a country and needs to use the WWAN service for a few days, wireless client A can purchase an SDR package from, e.g., Windows Live, which supports the WWAN service wireless client A desires, and purchases the spectrum from wireless client B for a desired time span. In this example, the user may be charged by a Carrier for this temporary data service usage.

In yet another example, wireless client A can obtain spectrum from wireless client B so that wireless client A can have access to a wider band. For such a situation, because wireless clients often need to share bandwidth with others, it may be important for wireless clients A and B to detect interferences and divide the bandwidth. The negotiation of spectrum can be free of charge, can be in exchange for spectrum, or in return for money. Other consideration may be use, as the present invention is not limited in this respect.

In another example, virtual Carriers may purchase spectrum from the real Carriers and then sub-lease to wireless clients for temporary usages. In this example, unlike the example described above, the exchange among individual wireless clients may not be reliable or sufficient. As such, virtual Carriers may see the value of providing temporary spectrum usages or providing both spectrum and data service usages to wireless clients. If a wireless client has subscribed to a data service plan already, or if a client only needs extra spectrum to do peer to peer data transmission, then only spectrum may be needed from the virtual Carrier. If a wireless client does not have a data service, both spectrum and data service are needed and may be obtained from the virtual Carrier.

Other situations, or combinations of situations, may be encountered requiring a wireless user to gain access to spectrum, as the present invention is not limited in this respect.

For all cases, the auction and sharing between the client and the auctioneer can be initiated by either party.

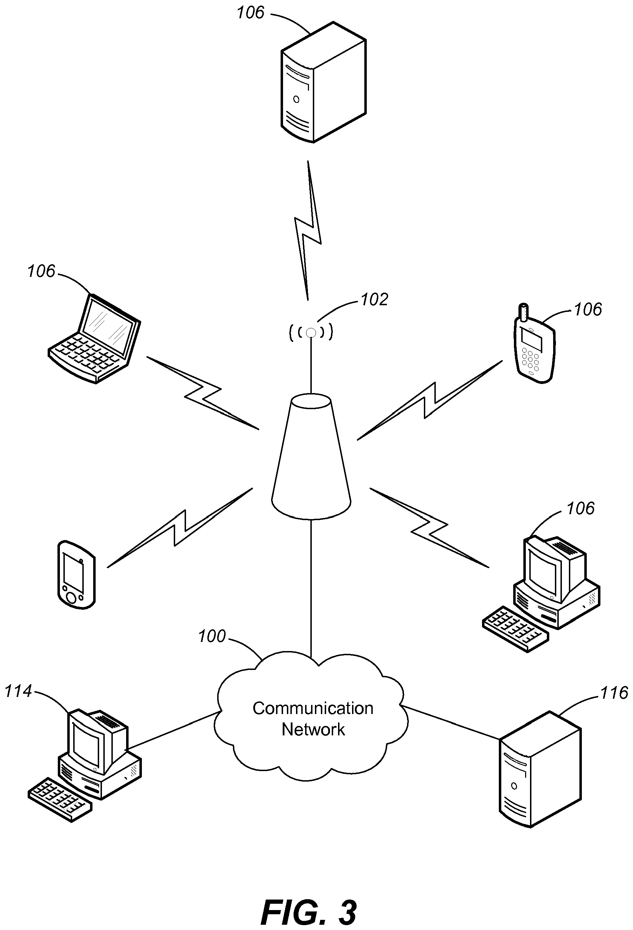

The aspects of the present invention described herein can be implemented on any of numerous computer system configurations and are not limited to any particular type of configuration. FIG. 3 illustrates one example of a computer system on which aspects of the invention can be implemented, although others are possible.

The computer system of FIG. 3 includes communication network **100,** wireless access point **102,** a plurality of wireless computing devices **106** configured to transmit and receive signals with the wireless access point **102,** and wired computing devices **114** and **116.** Communication network **100** can be any suitable communication medium or media for exchanging data between two or more computers (e.g., a server and a client), including the Internet. The wireless client devices can be any suitable computing device with wireless communication capabilities. Several exemplary wireless computing devices can be employed, including a laptop, a personal digital assistant, a smart phone, desktop computer, a server, and other devices, as the present invention is not limited in this respect. While FIG. 3 includes communication network **100** with wired devices **114** and **116,** embodiments of the invention can be used in systems that do not include a wired network.

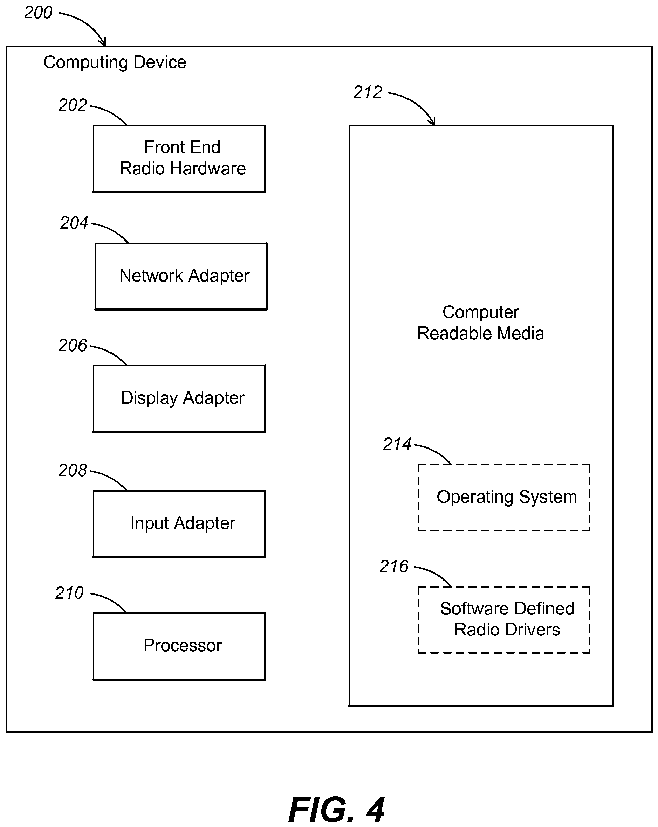

FIG. 4 schematically shows an illustrative computing device **200** that may be used in accordance with one or more embodiments of the invention. FIG. 4 is intended to be neither a depiction of necessary components for a computing device to operate with embodiments of the invention nor a comprehensive depiction. Computing device **200** comprises front end radio hardware **202** to communicate wirelessly, e.g., with wireless access point **102** or with other devices **108.** Device **200** also comprises a network adapter **204** to communicate over a computer network using other (possibly non-wireless) methods, a display adapter **206** to display information to a user of the device, and an input adapter **208** to receive commands from the user. Device **200** further comprises computer-readable media **212** for storing data to be processed and/or instructions to be executed by a processor **210.** Processor **210** enables processing of data and execution of instructions. The data and the instructions may be stored on the computer-readable media **212** and may, for example, enable communication between components of the computing device **200.** The data and instructions may comprise an operating system **214** and software defined radio drivers **216.** SDR drivers **216** may comprise data and instructions to carry out many functions typically done in hardware-implemented radios. The functions performed by drivers **216** may complement the functions of front end radio hardware **202,** such that all desired functions may be performed by the combination of hardware and software.

Front end radio hardware **202** may be any suitable radio hardware performing any combination of functions. These functions may include modulation (i.e., mixing a data signal into a high frequency transmission signal), filtering (i.e., parsing data out of a received signal), analog-to-digital or digital-to-analog conversion, signal generation (i.e., transmitting the data), etc. Front end **202** may be implemented to perform a minimum of the required functions that need to be performed at the hardware level, with the remaining functions being implemented by SDR drivers **216.** The present function is not limited to use with systems that decide the responsibilities of the hardware and software in any particular way. Front end **202** may comprise an antenna, a programmable radio-frequency waveform generator/decoder that spans a wide radio spectrum, an array of fast analog to digital converters, and/or serializers/de-serializers to convert analog data into computer-processable bytes and vice versa. A set of tunable analog filters may also be employed to comply with mandated spectrum masks. These hardware components are merely illustrative, as invention not limited to use on systems having any particular hardware.

SDR drivers 216, in addition to performing radio functions, may transmit control instructions to the tunable circuitry of front end 202 to customize the hardware of the front end 202 according to a particular wireless protocol.

It should be appreciated that one embodiment of the invention is directed to use with a computing device having programmable circuitry (e.g., the front end hardware 202 and the SDR drivers 216) that is programmable by control instructions to generate and/or receive signals according to a wireless protocol. Again, this programmable circuitry can take any suitable form and include any collection of directly programmable circuitry (e.g., a programmable processor) and circuitry that interacts with directly programmable circuitry to enable communication according to a wireless protocol.

It should be appreciated that the embodiments of the present invention described herein are not limited to being practiced with the type of computing device illustrated in FIG. 4, and that embodiments of the invention can be practiced with any suitable computing device. The front end 202 and adapters **204 -** 208 may be implemented as any suitable hardware, software, or combination thereof, and may be implemented as a single unit or multiple units. Similarly, computer-readable media 212 may be implemented as any medium or combination of media for storing data and instructions for access by a processing device.

Having thus described several aspects of at least one embodiment of this invention, it is to be appreciated that various alterations, modifications, and improvements will readily occur to those skilled in the art.

Such alterations, modifications, and improvements are intended to be part of this disclosure, and are intended to be within the spirit and scope of the invention. Accordingly, the foregoing description and drawings are by way of example only.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers.

Further, it should be appreciated that a computer may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including as a local area network or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or conventional programming or scripting tools, and also may be compiled as executable machine language code or intermediate code that is executed on a framework or virtual machine.

In this respect, the invention may be embodied as a computer readable medium (or multiple computer readable media) (e.g., a computer memory, one or more floppy discs, compact discs, optical discs, magnetic tapes, flash memories, circuit configurations in Field Programmable Gate Arrays or other semiconductor devices, etc.) encoded with one or more programs that, when executed on one or more computers or other processors, perform methods that implement the various embodiments of the invention discussed above. The computer readable medium or media can be transportable, such that the program or programs stored thereon can be loaded onto one or more different computers or other processors to implement various aspects of the present invention as discussed above.

The terms "program" or "software" are used herein in a generic sense to refer to any type of computer code or set of computer-executable instructions that can be employed to program a computer or other processor to implement various aspects of the present invention as discussed above. Additionally, it should be appreciated that according to one aspect of this embodiment, one or more computer programs that when executed perform methods of the present invention need not reside on a single computer or processor, but may be distributed in a modular fashion amongst a number of different computers or processors to implement various aspects of the present invention.

Computer-executable instructions may be in many forms, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

Various aspects of the present invention may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the invention may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

## Claims

1. A method for accessing a radio spectrum, the method being performed in a wireless device of a user, at least in part, by software defined radio, comprising:
a) sending (60) a request for access to a radio spectrum via a low data rate request over a common unlicensed band to an auctioneer's device;
b) receiving a request (62) to transmit a short packet at a requested band in order to measure an incremental radio spectrum interference at an auctioneer's receiver output from the auctioneer's device;
c) transmitting a short packet at the requested band;
d) receiving an offer to access a radio spectrum from the auctioneer's device, said access being based on one or more constraints, the one or more constraints comprising at least one of a length of time during which use of the radio spectrum is permitted and an amount of acceptable radio spectrum interference; and
e) accepting, rejecting or countering the offer.

2. The method of claim 1, wherein sending a request for access to a radio spectrum comprises sending at least one parameter.

3. The method of claim 2, wherein the at least one parameter comprises at least one of: required bandwidth; set of preferred bands; and desired mask properties.

4. The method of claim 3, wherein the at least one parameter comprises at least one of: a request for an incentive-based auction wherein additional parameters include at least one of a time of usage and a duration of usage; and a request for an interference-based auction wherein additional parameters include at least one of a location and an amount of acceptable radio spectrum interference.

5. The method of claim 1, wherein sending a request for access to a radio spectrum and receiving an offer to access a radio spectrum comprises first receiving a broadcast of an offering of bids to access radio spectrum.

6. A method for providing access to a radio spectrum, the method being performed at an auctioneer's device, comprising:
a) receiving (60) a request for access to a radio spectrum from a user of a wireless device via a low data rate request over a common unlicensed band;
b) sending (62) a request to transmit a short packet at a requested band to the user;
c) receiving a packet at the requested band and measuring (64) an incremental radio spectrum interference at the receiver output of the auctioneer's device;
d) determining a suitable radio spectrum to offer;
e) sending an auction bid to a radio spectrum provider;
f) receiving an offer to access a radio spectrum from the radio spectrum provider, said access being based on one or more constraints, the one or more constraints comprising at least one of a length of time during which use of the radio spectrum is permitted and an amount of acceptable radio spectrum interference;
g) sending the offer to the user; and
h) receiving (72) an acceptance, rejection or counter-offer from the user.

7. The method of claim 6, wherein sending an auction bid to a radio spectrum provider comprises sending subsequent auction bids or comprises sending the auction bid to a plurality of radio spectrum providers.

8. The method of claim 6, wherein receiving a request for access to a radio spectrum from a user comprises first sending a broadcast of an offering of bids to access radio spectrum.

9. A computer-readable medium having computer-executable instructions, the computer-executable instructions being adapted to perform, when executed, the method of one of claims 1 to 8.

10. An apparatus for operating a wireless computing device, the apparatus comprising:
a first circuit configurable to send a request for access to a radio spectrum by the apparatus via a low data rate request over a common unlicensed band;
a second circuit configurable to receive a request (62) to transmit a short packet at a requested band in order to measure an incremental radio spectrum interference at an auctioneer's receiver output;
a third circuit configurable to transmit a short packet at the requested band;
a fourth circuit configurable to receive an offer to access a radio spectrum, said access being based on one or more constraints, the one or more constraints comprising at least one of a length of time during which use of the radio spectrum is permitted and an amount of acceptable radio spectrum interference; and
a processor configurable to process an acceptance, a rejection or a counter-offer, wherein the apparatus further comprises a software defined radio operable to transmit and receive signals within the radio spectrum, and wherein the processor is configured to operate within the one or more constraints.

## Patentansprüche

1. Verfahren zum Zugreifen auf ein Funkspektrum, wobei das Verfahren in einer drahtlosen Vorrichtung eines Nutzers zumindest teilweise durch Software Defined Radio ausgeführt wird, aufweisend:
a) Senden (6o) einer Anforderung für einen Zugriff auf ein Funkspektrum über eine Anforderung mit niedriger Datenrate über ein gemeinsames nicht lizenziertes Band an eine Auktionator -Vorrichtung;
b) Empfangen einer Anforderung (62) ein kurzes Paket bei einem angeforderten Band zu übertragen, um eine inkrementelle Funkspektrum-Interferenz von der Auktionator-Vorrichtung an einem Ausgang eines Auktionator-Empfängers zu messen;
c) Übertragen eines kurzen Paketes bei dem angeforderten Band;
d) Empfangen eines Angebots von der Auktionator-Vorrichtung auf ein Funkspektrum zuzugreifen, wobei der Zugriff auf einer oder mehreren Bedingungen basiert, wobei die eine oder die mehreren Bedingungen zumindest eines von einer Zeitdauer, während der ein Gebrauch des Funkspektrums zugelassen ist, und eines Umfangs einer akzeptablen Funkspektrum-Interferenz aufweisen; und
e) Akzeptieren, Zurückweisen oder Entgegnen des Angebots.

2. Verfahren nach Anspruch 1, wobei ein Senden einer Anforderung für einen Zugriff auf ein Funkspektrum ein Senden zumindest eines Parameters aufweist.

3. Verfahren nach Anspruch 2, wobei der zumindest eine Parameter zumindest eines aufweist von: einer erforderlichen Bandbreite, Gruppe von bevorzugten Bändern und gewünschten Maskeneigenschaften.

4. Verfahren nach Anspruch 3, wobei der zumindest eine Parameter zumindest eines aufweist von: einer Anforderung einer Anreiz-basierten Aktion, wobei zusätzliche Parameter zumindest eines von einer Verwendungszeit und einer Verwendungsdauer aufweisen, und einer Anforderung einer interferenzbasierten Aktion, wobei zusätzliche Parameter zumindest eines von einem Ort und einem Umfang einer akzeptablen Funkspektrum-Interferenz aufweisen.

5. Verfahren nach Anspruch 1, wobei ein Senden einer Anforderung für einen Zugriff auf ein Funkspektrum und ein Empfangen eines Angebots auf ein Funkspektrum zuzugreifen, zunächst ein Empfangen einer Rundsendung eines Anbietens von Geboten auf ein Funkspektrum zuzugreifen, aufweist.

6. Verfahren zum Bereitstellen eines Zugriffs auf ein Funkspektrum, wobei das Verfahren bei einer Auktionator-Vorrichtung ausgeführt wird, aufweisend:
a) Empfangen (6o) einer Anforderung für einen Zugriff auf ein Funkspektrum von einem Nutzer einer drahtlosen Vorrichtung über eine Anforderung mit niedriger Datenrate über ein gemeinsames nicht lizenziertes Band;
b) Senden (62) einer Anforderung ein kurzes Paket bei einem angeforderten Band zum Nutzer zu übertragen;
c) Empfangen eines Pakets bei dem angeforderten Band und Messen (64) einer inkrementellen Funkspektrum-Interferenz am Empfängerausgang der Auktionator-Vorrichtung;
d) Bestimmen eines anzubietenden, geeigneten Frequenzspektrums;
e) Senden eines Auktionsgebots an einen Funkspektrum-Provider;
f) Empfangen eines Angebots auf ein Funkspektrum zuzugreifen vom Funkspektrum-Provider, wobei der Zugriff auf einer oder mehreren Bedingungen basiert, wobei die eine oder die mehreren Bedingungen zumindest eines von einer Zeitdauer, während der eine Nutzung des Funkspektrum zugelassen ist, und einem Umfang einer akzeptablen Funkspektrum-Interferenz aufweist;
g) Senden des Angebots an den Nutzer; und
h) Empfangen (72) einer Akzeptanz, einer Zurückweisung oder eines Gegenangebots vom Nutzer.

7. Verfahren nach Anspruch 6, wobei ein Senden eines Auktionsangebots an einen Funkspektrum-Provider ein Senden von nachfolgenden Auktionsgeboten aufweist oder ein Senden des Auktionsangebots an mehrere Funkspektrum-Provider aufweist.

8. Verfahren nach Anspruch 6, wobei ein Empfangen einer Anforderung für einen Zugriff auf ein Funkspektrum von einem Nutzer zunächst ein Senden einer Rundsendung eines Anbietens von Geboten auf ein Funkspektrum aufweist.

9. Computerlesbares Medium mit Computer-ausführbaren Befehlen, wobei die Computer-ausführbaren Befehle angepasst sind, um das Verfahren gemäß einem der Ansprüche 1-8 durchzuführen, wenn sie ausgeführt werden.

10. Vorrichtung zum Betreiben einer drahtlosen Rechenvorrichtung, wobei die Vorrichtung aufweist:
eine erste Schaltung, die konfigurierbar ist, um eine Anforderung für einen Zugriff auf ein Funkspektrum durch die Vorrichtung über eine Anforderung mit niedriger Datenrate über ein gemeinsames, nicht lizenziertes Band zu senden;
eine zweite Schaltung, die konfigurierbar ist, um eine Anforderung (62) zu empfangen, ein kurzen Paket bei einem angeforderten Band zu übertragen, um eine inkrementelle Funkspektrum-Interferenz an einer Ausgabe eines Auktionator-Empfängers zu messen;
eine dritte Schaltung, die konfigurierbar ist, um ein kurzes Paket bei dem angeforderten Band zu übertragen;
eine vierte Schaltung, die konfigurierbar ist, um ein Angebot, um auf ein Funkspektrum zuzugreifen, zu empfangen, wobei der Zugriff auf einer oder mehreren Bedingungen basiert, wobei die eine oder die mehreren Bedingungen zumindest eines von einer Zeitdauer, während der ein Gebrauch des Radiospektrums zugelassen ist, und einem Betrag einer akzeptablen Funkspektrum-Interferenz aufweisen; und
ein Prozessor, der konfigurierbar ist, um eine Akzeptanz, eine Zurückweisung oder ein Gegenangebot zu bearbeiten, wobei die Vorrichtung weiter ein Software Defined Radio aufweist, das betrieben werden kann, um Signale im Funkspektrum zu übertragen und zu empfangen, und wobei der Prozessor konfiguriert ist, um innerhalb der einen oder den mehreren Bedingungen zu arbeiten.

## Revendications

1. Procédé d'accès à un spectre radio, le procédé étant mis en oeuvre dans un dispositif sans fil d'un utilisateur, au moins en partie, par une fonction radioélectrique définie par logiciel, comprenant les étapes ci-dessous consistant à :
a) envoyer (6o) une demande d'accès à un spectre radio, par le biais d'une demande à faible débit de données, sur une bande sans licence commune, au niveau du dispositif d'un adjudicateur public ;
b) recevoir une demande (62) visant à transmettre un paquet court, à une bande demandée, afin de mesurer un brouillage de spectre radio incrémentiel, au niveau d'une sortie de récepteur d'un adjudicateur public, en provenance du dispositif d'adjudicateur public ;
c) transmettre un paquet court à la bande demandée ;
d) recevoir une offre pour accéder à un spectre radio, en provenance du dispositif de l'adjudicateur public, ledit accès étant basé sur une ou plusieurs contraintes, ladite une ou lesdites plusieurs contraintes comprenant au moins l'une parmi une durée temporelle au cours de laquelle l'utilisation du spectre radio est autorisée, et une quantité de brouillage de spectre radio acceptable ; et
e) accepter, rejeter ou contrer l'offre.

2. Procédé selon la revendication 1, dans lequel l'étape d'envoi d'une demande d'accès à un spectre radio consiste à envoyer au moins un paramètre.

3. Procédé selon la revendication 2, dans lequel ledit au moins un paramètre comprend au moins l'un des éléments parmi : une largeur de bande requise ; un ensemble de bandes préférées ; et des propriétés de masque souhaitées.

4. Procédé selon la revendication 3, dans lequel ledit au moins un paramètre comprend au moins l'un des éléments parmi : une demande d'adjudication publique basée sur l'incitation dans laquelle des paramètres supplémentaires incluent au moins un paramètre parmi un temps d'utilisation et une durée d'utilisation ; et une demande d'adjudication publique à base de brouillage dans laquelle des paramètres supplémentaires incluent au moins l'un des paramètres parmi un emplacement et une quantité de brouillage de spectre radio acceptable.

5. Procédé selon la revendication 1, dans lequel l'étape d'envoi d'une demande d'accès à un spectre radio et l'étape de réception d'une offre pour accéder à un spectre radio comportent l'étape consistant à recevoir tout d'abord une radiodiffusion d'une offre de soumissions pour accéder au spectre radio.

6. Procédé de fourniture d'accès à un spectre radio, le procédé étant mis en oeuvre au niveau du dispositif d'un adjudicateur public, comprenant les étapes ci-dessous consistant à :
a) recevoir (6o) une demande d'accès à un spectre radio, en provenance d'un utilisateur d'un dispositif sans fil, par le biais d'une demande à faible débit de données sur une bande sans licence commune ;
b) envoyer (62) une demande visant à transmettre un paquet court, à une bande demandée, à l'utilisateur ;
c) recevoir un paquet, à la bande demandée, et mesurer (64) un brouillage de spectre radio incrémentiel à la sortie de récepteur du dispositif de l'adjudicateur public ;
d) déterminer un spectre radio pertinent à offrir ;
e) envoyer une soumission d'adjudication publique à un fournisseur de spectre radio ;
f) recevoir une offre d'accès à un spectre radio, en provenance du fournisseur de spectre radio, ledit accès étant basé sur une ou plusieurs contraintes, ladite une ou lesdites plusieurs contraintes comprenant au moins l'une parmi une durée temporelle au cours de laquelle l'utilisation du spectre radio est autorisée, et une quantité de brouillage de spectre radio acceptable ;
g) envoyer l'offre à l'utilisateur ; et
h) recevoir (72) une acceptation, un refus ou une contre-offre en provenance de l'utilisateur.

7. Procédé selon la revendication 6, dans lequel l'étape d'envoi d'une soumission d'adjudication publique à un fournisseur de spectre radio consiste à envoyer des soumissions d'adjudication publique subséquentes, ou consiste à envoyer la soumission d'adjudication publique à une pluralité de fournisseurs de spectre radio.

8. Procédé selon la revendication 6, dans lequel l'étape de réception d'une demande d'accès à un spectre radio, en provenance d'un utilisateur, comporte l'étape consistant à envoyer tout d'abord une radiodiffusion d'une offre de soumissions pour accéder au spectre radio.

9. Support lisible par ordinateur présentant des instructions exécutables par ordinateur, les instructions exécutables par ordinateur étant aptes à mettre en oeuvre, lorsqu'elles sont exécutées, le procédé selon l'une quelconque des revendications 1 à 8.

10. Appareil destiné à exploiter un dispositif informatique sans fil, l'appareil comprenant :
un premier circuit configurable de manière à envoyer une demande d'accès à un spectre radio, par l'appareil, par l'intermédiaire d'une demande à faible débit de données sur une bande sans licence commune ;
un deuxième circuit configurable de manière à recevoir une demande (62) visant à transmettre un paquet court, à une bande demandée, afin de mesurer un brouillage de spectre radio incrémentiel au niveau d'une sortie de récepteur d'un adjudicateur public ;
un troisième circuit configurable de manière à transmettre un paquet court, à la bande demandée ;
un quatrième circuit configurable de manière à recevoir une offre pour accéder à un spectre radio, ledit accès étant basé sur une ou plusieurs contraintes, ladite une ou lesdites plusieurs contraintes comprenant au moins l'une parmi une durée temporelle au cours de laquelle l'utilisation du spectre radio est autorisée, et une quantité de brouillage de spectre radio acceptable ; et
un processeur configurable de manière à traiter une acceptation, un refus ou une contre-offre ;
dans lequel l'appareil comporte en outre une fonction radioélectrique définie par logiciel, exploitable de manière à transmettre et recevoir des signaux au sein du spectre radio, et dans lequel le processeur est configuré de manière à fonctionner au sein de ladite une ou desdites plusieurs contraintes.
